(19) **Europäisches Patentamt / European Patent Office / Office européen des brevets**

(11) **EP 2 182 524 A1**

(12) **EUROPEAN PATENT APPLICATION**

(43) Date of publication:
**05.05.2010 Bulletin 2010/18**

(51) Int Cl.:
*H01B 3/44* (2006.01)          *C08L 23/08* (2006.01)
*C08F 210/16* (2006.01)

(21) Application number: **08168047.2**

(22) Date of filing: **31.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Borealis AG**
**1220 Vienna (AT)**

(72) Inventors:
• **Pakkanen, Anneli**
 **FI-01120, Västerskog (FI)**

• **Steffl, Thomas**
 **SE-44446, Stenungsund (SE)**
• **Rekonen, Petri**
 **FI-06100, Porvoo (FI)**
• **Bergstra, Michiel**
 **FI-00810, Helsinki (NL)**

(74) Representative: **Campbell, Neil Boyd et al**
**Dehns**
**St Bride's House**
**10 Salisbury Square**
**London**
**EC4Y 8JD (GB)**

(54) **Cable and Polymer composition comprising a multimodal ethylene copolymer**

(57)    The present invention relates to a cable comprising a conductor surrounded by one or more layers, wherein at least one layer comprises a polymer composition comprising a multimodal copolymer of ethylene with one or more comonomers, to a process for producing the cable and to a polymer composition suitable as a cable layer material.

**EP 2 182 524 A1**

## Description

### Technical field

The present invention is directed to a cable surrounded by at least one layer comprising a multimodal copolymer of ethylene, to a preparation process thereof, to a polymer composition comprising a multimodal copolymer of ethylene, as well as to a use thereof for producing a cable layer.

### Background art

A typical electric cable generally comprises a conductor that is surrounded by one or more layers depending on the application area. E.g. power cable has several layers of polymeric materials including an inner semiconducting layer, followed by an insulating layer, and then an outer semiconducting layer. To these layers, one or more further auxiliary layer(s) may be added. The outer protecting polymeric layer is known i.a. as a jacketing layer. Any of the layers can be crosslinked as well known in the field.

Safety, reliability and long use life are important key factors required for cable applications. As the outer jacketing layer provides the outer protection of the cable, it plays an important role to provide system functionality. Linear low density polyethylene (LLDPE) is known i.a. as a jacketing layer material. The mechanical properties of the layer can be improved by using polyethylene having higher density such as high density polyethylene (HDPE) polymers. HDPE polymers provide i.a. improved mechanical strength to a cable layer, such as abrasion resistance. However, HDPE has a disadvantage of limited stress cracking resistance.

Multimodal PE provides one way of tailoring the polymer properties. Moreover, e.g. single site catalyst (SSC) offers i.a. controlled incorporation of comonomers which provides a further means for tailoring the polymer. However, the processability of SS catalyst based PE is often problematic.

There is a continuous need in the polymer field to find polymers which are suitable for demanding polymer applications, particularly for W&C applications, where the cable materials must meet high requirements and stringent authority regulations.

### Objects of the invention

One of the objects of the present invention is to provide an alternative cable with one or more layer(s) wherein at least one layer contains a polyethylene polymer composition having advantageous mechanical properties. Preferably, the polyethylene polymer composition is feasible to process including i.a. good processability which preferably provides an advantageous surface smoothness to the obtained layer, preferably to at least a jacketing layer. Also a preparation process of said cable is provided.

A further object of the invention is to provide a polymer composition which comprises a multimodal polyethylene polymer having excellent mechanical properties combined with advantageous processing properties. Moreover a preparation method and use thereof in a cable layer is provided.

### Summary of the invention

Accordingly, the invention is directed to a cable comprising a conductor surrounded by one or more layers, wherein at least one layer comprises a polymer composition comprising a multimodal copolymer of ethylene with one or more comonomers, wherein the multimodal ethylene copolymer has a density of from 940 to 977 kg/m$^3$ and a stress cracking resistance expressed as CTL at 5 MPa load of at least 30 hours.

Constant Tensile Load (CTL) method is conventionally used for determining stress cracking resistance property of a polymer and in this application it is used for assessing the environmental crack stress cracking resistance (ESCR). The CTL-method is described below under "Determination methods".

The multimodal ethylene copolymer as defined in claim 1 having a higher density and comprising at least one comonomer contributes to mechanical properties, such as good stress cracking resistance expressed as CTL, that are advantageous for cable layer material(s).

The cable of the invention, which is referred herein as Cable, has preferably surprisingly good further mechanical properties including high abrasion resistance. Preferably the layer of the polymer composition of Cable has high mechanical strength and provides also a feasible flexibility to the cable. Further preferably the formation of the cable layer of the invention is very feasible due to good processability of the polymer composition of the invention.

The "polymer composition of the invention" is referred herein as the Polymer composition and the "multimodal copolymer of ethylene with one or more comonomer(s) of the invention" is referred herein interchangeably as multimodal PE copolymer or shortly as PE copolymer.

The term "conductor" means herein above and below that the conductor comprises one or more wires. Moreover, the cable may comprise one or more such conductors. Preferably the conductor is an electrical conductor.

"Cable" covers all type of wires and cables used in the wire and cable (W&C) applications.

The cable may comprise two or more layers comprising the Polymer composition. The said at least one layer of the Cable comprising the Polymer composition is preferably a jacketing layer.

The invention is also directed to a process for producing said Cable, comprising steps of applying, preferably by (co)extrusion, one or more layers on a conductor, which layers comprise a polymer, wherein at least one layer comprises said polymer composition of the invention.

The Polymer composition is highly feasible for use as a cable layer, preferably at least a jacketing layer. As a subgroup falling under the suitable Polymer composition for use in the Cable as defined above, the invention further provides independently a Polymer composition (Pc') which comprises the multimodal PE copolymer, wherein the multimodal ethylene copolymer has a density of from 940 to 977 kg/m$^3$, a CTL at 5 MPa of at least 30 hours and, additionally,

a) an MFR$_2$ of from 0.2 to 2.5 g/10 min, or

b) a die swell of 20 % or less, or

both a) an MFR$_2$ of from 0.2 to 2.5 g/10 min and b) a die swell of 20 % or less.

Die swell property is a well known physical property of a polymer which characterises the swell behaviour during the processing, e.g. extrusion, of the polymer. The measurement method of die swell is described below under "Determination methods". Preferably the Polymer compostion (Pc') has both the MFR$_2$ and die swell as defined above. In addition to W&C applications the Polymer composition (Pc') can be used in other polymer applications as well.

The preferable properties and embodiments of the Cable, Polymer composition including the independent subgroup Polymer composition (Pc'), the PE copolymer, as well as the preparation processes of these are described below. As evident said preferable properties and embodiments are given in general terms meaning that they can be combined in any combination to further define the preferable embodiments of the invention.

**Figures**

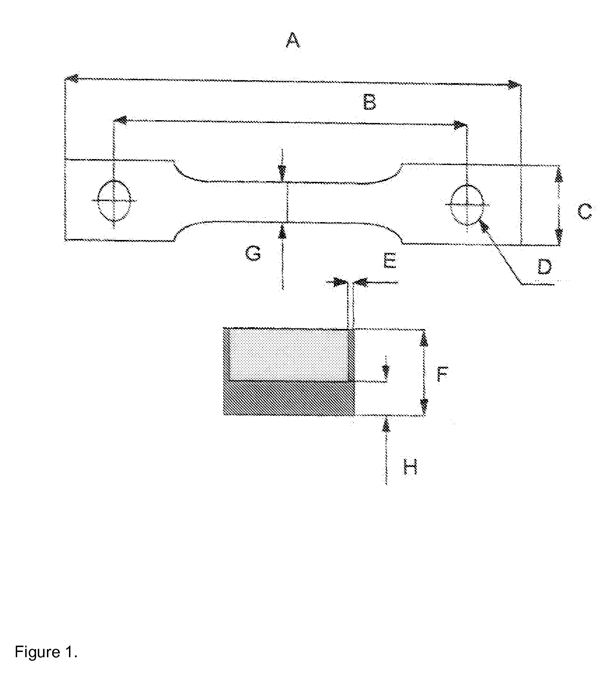

Figure 1 shows the configuration of the sample used in the CTL method.

**Detailed description**

The Polymer composition comprises the PE copolymer as defined above. The below description applies naturally both for the Polymer composition of the Cable and for the independent Polymer composition (Pc') which is also the preferred subgroup of the Polymer composition of the Cable. If not specified in the description part, then the measurement methods for the further preferable properties as defined below for the Polymer composition of the Cable are described later below under "Determination methods".

PE copolymer

The density of the multimodal PE copolymer is preferably of more than 941 kg/m$^3$, preferably of from 942 to 960 kg/m$^3$, preferably of from 942 to 950 kg/m$^3$.

The CTL (at 5 MPa) of the PE copolymer is preferably an of at least 40 h, preferably of at least 50 h, more preferably of at least 60 h to, more preferably of from 65 to 10 000 h.

In one preferred embodiment the PE copolymer has a melt index MFR$_2$ of from 0.1 to 5.0 g/10 min, preferably of from 0.1 to 2.5 g/10 min, preferably of from 0.2 to 2.5 g/10 min, more preferably of from 0.3 to 2.0 g/10 min, and more preferably of from 0.3 to 1.0 g/10 min.

Preferable PE copolymers have an MFR$_5$ of from 0.05 to 10.0 g/10 min, preferably of from 0.1 to 5.0 g/10 min, more preferably of from 0.2 to 2.5 g/10 min.

Also preferably the MWD (Mw/Mn) of the PE copolymer is preferably from 1.5 to 30, preferably of from 2.0 to 25, more preferably of from 3.0 to 20, more preferably from of from 4.0 to 17.

In a further preferable embodiment the PE copolymer has a die swell of 20 % or less, preferably of 10 % or less.

Moreover, the mechanical properties of the multimodal PE copolymer are excellent.

In another preferred embodiment the PE copolymer has a flexural modulus of less than 990 MPa, preferably of less than 950 MPa, more preferably from 400 to 930 MPa.

In a further preferred embodiment the PE copolymer has (iii) Stress at break of more than 390 MPa, preferably of more than 400 MPa.

In one preferable embodiment the PE copolymer has a taber abrasion of less than 8.0, preferably of less than 7.0, more preferably of less than 6.5.

The PE copolymer preferably has a weight average molecular weight of from 75000 g/mol to 250000 g/mol, more preferably from 100000 g/mol to 250000 g/mol and in particular from 120000 g/mol to 220000 g/mol. Additionally, it preferably has a number average molecular weight of 10000 g/mol to 40000 g/mol.

As already defined the PE copolymer is multimodal. The term "multimodal" means herein, unless otherwise stated, multimodality with respect to molecular weight distribution and includes also bimodal polymer. Generally, a polyethylene comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

The multimodal PE copolymer usable in the present invention comprises a lower weight average molecular weight (LMW) component (A) and a higher weight average molecular weight (HMW) component (B). Said LMW component has a lower molecular weight than the HMW component. The PE copolymer comprises preferably:

(A) from 30 to 70 % by weight (wt%), preferably from 40 to 60 % by weight, based on the combined amount of components (A) and (B), of a low molecular weight (LMW) ethylene polymer selected from ethylene homopolymer and a copolymer of ethylene with one or more alpha-olefin comonomer(s) having from 3 to 20 carbon atoms, and
(B) from 30 to 70 % by weight, preferably from 40 to 60 % by weight, based on the combined amount of components (A) and (B), of a high molecular weight (HMW) copolymer of ethylene with one or more alpha-olefin comonomer(s) having from 3 to 20 carbon atoms.

Comonomer as used herein means monomer units other than ethylene which are copolymerisable with ethylene.

Without limiting to any theory it is believed that the HMW copolymer (B) with at least one comonomer contributes to the improved stress cracking resistance in a manner suitable at least for W&C applications.

The PE copolymer comprises more preferably:

(A) from 40 to 60 % by weight, preferably 45 to 55 wt%, based on the combined amount of components (A) and (B), of a low molecular weight (LMW) ethylene polymer selected from ethylene homopolymer and a copolymer of ethylene and one or more alpha-olefins having from 3 to 16 carbon atoms, and preferably having a weight average molecular weight of from 5000 to 150000 g/mol, preferably 5000 to 130000 g/mol, preferably from 10000 to 100000 g/mol, more preferably from 15000 to 80000 g/mol; and
(B) from 40 to 60 % by weight, preferably 45 to 55 wt%, based on the combined amount of components (A) and (B), of a high molecular weight (HMW) copolymer of ethylene with one or more alpha-olefin comonomer(s) having from 3 to 16 carbon atoms and preferably having a weight average molecular weight of from 100000 to 1000000 g/mol, preferably from130000 to 500000 g/mol, more preferably from 150000 to 500000 g/mol.

The low molecular weight ethylene polymer (A) is preferably an ethylene homopolymer and the $MFR_2$ of said (LMW) ethylene homopolymer is preferably of from 4.0 to 400 g/10 min, preferably of from 4.0 to 300 g/10 min, more preferably of from 4.0 to 200 g/10 min. Preferably the (LMW) homopolymer of ethylene (A) has a density of from 960 to 977 $kg/m^3$.

The high molecular weight ethylene copolymer of ethylene (B) of the PE copolymer has preferably a density of from 890 to 930 $kg/m^3$, preferably of from 900 to 930 $kg/m^3$.

The high molecular weight copolymer (B) is a copolymer of ethylene and one or more alpha-olefins having from 4 to 10, preferably 4 to 8 carbon atoms.

The term "PE copolymer" as used herein encompasses polymers comprising repeat units deriving from ethylene and at least one other C3-20 alpha olefin monomer. Preferably, PE copolymer may be formed from ethylene together with at least one C4-10 alpha-olefin comonomer, e.g. 1-butene, 1-hexene or 1-octene. Preferably, PE copolymer is a binary copolymer, i.e. the polymer contains ethylene and one comonomer, or a terpolymer, i.e. the polymer contains ethylene and two or three comonomers. Preferably, PE copolymer comprises an ethylene hexene copolymer, ethylene octene copolymer or ethylene butene copolymer. The amount of comonomer present in PE copolymer is at least 0.01 mol-%, preferably at least 0.1 mol-%, such as preferably 0.1 to 3.0 mol%, relative to ethylene. Alternatively, comonomer contents present in PE copolymer may be 0.02 to 12 wt%, especially 0.3 to 8 wt% relative to ethylene. In any copolymeric HMW component, preferably at least 0.1 mol-%, e.g. at least 0.5 mol%, such as up to 5 mol-%, of repeat units are derived from said comonomer.

As a subgroup of the PE copolymer suitable for the Cable, the invention further provides independently a Polymer composition (Pc') comprising a multimodal copolymer of ethylene which is the PE copolymer as defined above which has a density of from 940 to 977 $kg/m^3$, a CTL at 5 MPa of at least 30 hours and, additionally,

> a) an $MFR_2$ of from 0.2 to 2.5 g/10 min, or
> b) a die swell of 20 % or less, or

both a) an $MFR_2$ of from 0.2 to 2.5 g/10 min and b) a die swell of 20 % or less.

Preferably said independent Polymer composition (Pc') subgroup comprises a PE copolymer which has at least a) an $MFR_2$ of from 0.2 to 2.5 g/10 min and preferably also b) a die swell of 20 % or less Furthermore, it is preferred that the density of of the Polymer composition (Pc) is more than 942 $kg/m^3$, preferably of from 942 to 960 $kg/m^3$, preferably of from 942 to 950 $kg/m^3$. Further preferably the Polymer composition (Pc) has a CTL (5 MPa) of at least 40 h, preferably of at least 50 h, more preferably of from 60 to 70000 h, more preferably of from 65 to 5000 h. Further preferably the Polymer composition (Pc) has a) an $MFR_2$ of from 0.3 to 2.0 g/10 min, preferably from 0.3 to 1.0 g/10 min or b) a die swell of 10 % or less, more preferably a) an $MFR_2$ of from 0.3 to 2.0 g/10 min, preferably from 0.3 to 1.0 g/10 min and b) a die swell of 10 % or less

Preferably, in this independent subgroup of the Polymer composition (Pc') the multimodal PE copolymer comprises:

> (A) from 40 to 60 wt%, preferably 45 to 55 wt%, based on the combined amount of components (A) and (B), of a low molecular weight (LMW) ethylene polymer selected from ethylene homopolymer and a copolymer of ethylene with one or more alpha-olefin comonomer(s) having from 3 to 20 carbon atoms, preferably from ethylene homopolymer, and
>
> - preferably has a weight average molecular weight of from 5000 to 150000 g/mol, preferably 5000 to 130000 g/mol, preferably from 10000 to 100000 g/mol, more preferably from 15000 to 80000 g/mol; and
> - preferably has a density of from 960 to 977 $kg/m^3$; and
>
> (B) from 40 to 60 wt%, preferably 45 to 55 wt%, based on the combined amount of components (A) and (B), of a high molecular weight (HMW) copolymer of ethylene and one or more alpha-olefins having from 3 to 20 carbon atoms and
>
> - preferably has a weight average molecular weight of from 100000 to 1000000 g/mol, preferably from130000 to 500000 g/mol, more preferably from 150000 to 500000 g/mol and
> - has preferably a density of from 890 to 930 $kg/m^3$, preferably of from 900 to 930 $kg/m^3$.

More preferably, in this independent subgroup of the Polymer composition (Pc') the multimodal PE copolymer has at least one, preferably two or more, in any combination, of the following properties:

> (i) Flexural modulus of less than 990 MPa, preferably less than 950 MPa, more preferably from 400 MPa to 930 MPa,
> (ii) Stress at break of more than 390 MPa, preferably more than 400 MPa,
> (iii) MWD (Mw/Mn) of the PE copolymer is preferably from 1.5 to 30, preferably of from 2.0 to 25, more preferably of from 3.0 to 20, more preferably from of from 4.0 to 17, or
> (iv) The one or more comonomer(s) of (LMW) ethylene copolymer (A) and the (HMW) ethylene copolymer (B) of the multimodal PE copolymer are selected from one or more alpha-olefin(s) having from 3 to 16, preferably from 4 to 10, more preferably from 4 to 8, carbon atoms, or
> (v) the (LMW) ethylene copolymer (A) of the multimodal ethylene copolymer is a (LMW) homopolymer of ethylene and has $MFR_2$ of 4.0 to 400 g/10 min, preferably of from 4.0 to 300 g/10 min, more preferably of from 4.0 to 200 g/ 10 min;

-preferably the multimodal ethylene copolymer has all of the above properties (i) to (v).

The preferred PE copolymer of the Polymer composition, including any embodiments and subgroup Polymer composition (Pc'), is obtainable by polymerising ethylene in the presence of a single site catalyst and an activator for said catalyst (the combination is also referred herein shortly as a single site catalyst, as evident for a skilled person), preferably a multimodal ethylene copolymer which comprises a low molecular weight copolymer of ethylene (A) which is obtainable by polymerising ethylene in the presence of a single site catalyst and an activator for said catalyst and a high molecular weight copolymer of ethylene (B) which is obtainable by polymerising ethylene in the presence of a single site catalyst and an activator for said catalyst. In case of the preferred multimodal PE copolymer the LMW polymer (A) and the HMW polymer (B) are preferably obtainable by using the same catalyst, preferably the same single site catalyst. The preferred embodiment of the invention is thus based on a polymer composition suitable for a cable layer, which polymer has advantageous properties and is produced by a single site catalyst. Naturally the polymerisation of ethylene occurs together with monomer units of one or more comonomer(s).

The PE copolymer may comprise further polymer components, e.g. three components being a trimodal PE copolymer. The amount of such further components is preferably up to 10 wt%, preferably up to 5 wt%, based on the amount of the PE copolymer. Preferably the PE copolymer consists of LMW and HMW polymer components. Optionally multimodal PE copolymer, e.g. the preferable bimodal PE copolymer, may also comprise e.g. up to 5 wt% of a well known polyethylene prepolymer which is obtainable from a prepolymerisation step as well known in the art, e.g. as described in WO9618662. In case of such prepolymer, the prepolymer component is typically comprised in one of LMW and HMW components, or alternatively forms a separate Mw fraction, i.e. further component, of the PE copolymer.and thus contributes to the multimodality,

By ethylene homopolymer is meant a polymer which substantially consists of ethylene units. As the process streams may have a small amount of other polymerisable species as impurities the homopolymer may contain a small amount of units other than ethylene. The content of such units should be lower than 0.2 % by mole, preferably less than 0.1 % by mole.

Polymerisation process

The multimodal (e.g. bimodal) PE copolymer can be obtainable by blending mechanically together two or more separate polymer components, e.g. conventionally available components, or, preferably, by in-situ blending in a multistage polymerisation process during the preparation process of the polymer components. Both mechanical and in-situ blending are well known in the field.

The preferred multimodal PE copolymer is typically produced in a multistage polymerisation process in the presence of a single site catalyst.

In the multistage polymerisation process ethylene and alpha-olefins having from 4 to 10 carbon atoms are polymerised in a process comprising at least two polymerisation stages. Each polymerisation stage may be conducted in a separate reactor but they may also be conducted in at least two distinct polymerisation zones in one reactor. Preferably, the multistage polymerisation process is conducted in at least two cascaded polymerisation stages.

Catalyst

The polymerisation is typically conducted in the presence of the preferred single site polymerisation catalyst. Preferably the single site catalyst is a metallocene catalyst. Such catalysts comprise a transition metal compound which typically contains an organic ligand, preferably a cyclopentadienyl, indenyl or fluorenyl ligand. Preferably the catalyst contains two cyclopentadienyl, indenyl or fluorenyl ligands, which may be bridged by a group preferably containing silicon and/or carbon atom(s). Further, the ligands may have substituents, such as alkyl groups, aryl groups, arylalkyl groups, alkylaryl groups, silyl groups, siloxy groups, alkoxy groups and like. Suitable metallocene compounds are known in the art and are disclosed, among others, in WO-A-97/28170, WO-A-98/32776, WO-A-99/61489, WO-A-03/010208, WO-A-03/051934, WO-A-03/051514, WO-A-2004/085499, WO-A-2005/002744, EP-A-1752462 and EP-A-1739103.

Especially, the metallocene compound must be capable of producing polyethylene having sufficiently high molecular weight. Especially it has been found that metallocene compounds having hafnium as the transition metal atom or metallocene compounds comprising an indenyl or tetrahydroindenyl type ligand often have the desired characteristics.

One example of suitable metallocene compounds is the group of metallocene compounds having zirconium, titanium or hafnium as the transition metal and one or more ligands having indenyl structure bearing a siloxy substituent, such as [ethylenebis(3,7-di(triisopropylsiloxy)inden-1-yl)]zirconium dichloride (both rac and meso), [ethylenebis(4,7-di(triisopropylsiloxy)inden-1-yl)]zirconium dichloride (both rac and meso), [ethylenebis(5-tert-butyldimethylsiloxy)inden-1-yl)]zirconium dichloride (both rac and meso), bis(5-tert-butyldimethylsiloxy)inden-1-yl)zirconium dichloride, [dimethylsi-lylenebis(5-tert-butyldimethylsiloxy)inden-1-yl)]zirconium dichloride (both rac and meso), (N-tert-butylamido)(dime-thyl)($\eta^5$-inden-4 -yloxy)silanetitanium dichloride and [ethylenebis(2- (tert-butydimethylsiloxy)inden-1-yl)]zirconium dichloride (both rac and meso).

Another example is the group of metallocene compounds having hafnium as the transition metal atom and bearing a cyclopentadienyl type ligand, such as bis(n-butylcyclopentadienyl)hafnium dichloride, bis(n-butylcyclopentadienyl) dibenzylhafnium, dimethylsilylenenebis(n-butylcyclopentadienyl)hafnium dichloride (both rac and meso) and bis [1,2,4-tri(ethyl)cyclopentadienyl]hafnium dichloride.

Still another example is the group of metallocene compounds bearing a tetrahydroindenyl ligand such as bis (4,5,6,7-tetrahydroindenyl)zirconium dichloride, bis(4,5,6,7-tetrahydroindenyl)hafnium dichloride, ethylenebis(4,5,6,7-tetrahydroindenyl)zirconium dichloride, dimethylsilylenebis(4,5,6,7-tetrahydroindenyl)zirconium dichloride.

It is evident that the single site catalyst typically also comprises an activator. Generally used activators are alumoxane compounds, such as methylalumoxane (MAO), tetraisobutylalumoxane (TIBAO) or hexaisobutylalumoxane (HIBAO). Also boron activators, such as those disclosed in US-A-2007/049711 may be used. The activators mentioned above may be used alone or they may be combined with, for instance, aluminium alkyls, such as triethylaluminium or tri-isobutylaluminium.

The catalyst is preferably supported. The support may be any particulate support, including inorganic oxide support, such as silica, alumina or titania, or polymeric support, such as polymer comprising styrene or divinylbenzene.

The catalyst may also comprise the metallocene compound on solidified alumoxane or it may be a solid catalyst prepared according to emulsion solidification technology. Such catalysts are disclosed, among others, in EP-A-1539775 or WO-A-03/051934.

Polymerisation

It is evident that the claimed properties as such, i.e. individually, are very well known, but the claimed balance thereof (i.e. combination of the claimed ranges) is novel and surprisingly suitable for W&C applications. The new property balance can be obtained by controlling the process conditions and optionally by choice of catalyst, which can be a conventional catalyst, as well known to a skilled person. E.g. molecular weight distribution (MWD) and molecular weight (Mw, Mn and Mz) can be tailored i.a. by adapting the split and chain length of the HMW component using e.g. hydrogen, as well known in the art. The tailoring of stress cracking property (expressed as CTL) can be made e.g. by tailoring the HMW component, the comonomer content thereof and split thereof in a known manner.

The multimodal PE copolymer may be produced in any suitable polymerisation process known in the art. Into the polymerisation zone a catalyst, ethylene, optionally an inert diluent, and optionally hydrogen and/or comonomer are introduced. The low molecular weight ethylene polymer component is preferably produced in a first polymerisation zone and the high molecular weight ethylene copolymer component is produced in a second polymerisation zone. The first polymerisation zone and the second polymerization zone may be connected in any order, i.e. the first polymerisation zone may precede the second polymerisation zone, or the second polymerisation zone may precede the first polymerisation zone or, alternatively, polymerisation zones may be connected in parallel. However, it is preferred to operate the polymerisation zones in cascaded mode. The polymerisation zones may operate in slurry, solution, or gas phase conditions or in any combinations thereof. Suitable reactor configurations are disclosed, among others, in WO-A-92/12182, EP-A-369436, EP-A-503791, EP-A-881237 and WO-A-96/18662. Examples of processes where the polymerisation zones are arranged within one reactor system are disclosed in WO-A-99/03902, EP-A-782587 and EP-A-1633466.

It is often preferred to remove the reactants of the preceding polymerisation stage from the polymer before introducing it into the subsequent polymerisation stage. This is preferably done when transferring the polymer from one polymerisation stage to another. Suitable methods are disclosed, among others, in EP-A-1415999 and WO-A-00/26258.

The polymerisation in the polymerisation zone may be conducted in slurry. The catalyst can be fed e.g. in a conventional manner to the reactor. Then the polymer particles formed in the polymerisation, together with the catalyst fragmented and dispersed within the particles, are suspended in the fluid hydrocarbon. The slurry is agitated to enable the transfer of reactants from the fluid into the particles.

The polymerisation usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amount of methane, ethane and/or butane.

The ethylene content in the fluid phase of the slurry may be from 2 to about 50 % by mole, preferably from about 3 to about 20 % by mole and in particular from about 5 to about 15 % by mole. The benefit of having a high ethylene concentration is that the productivity of the catalyst is increased but the drawback is that more ethylene then needs to be recycled than if the concentration was lower.

The temperature in the slurry polymerisation is typically from 50 to 115°C, preferably from 60 to 110°C and in particular from 70 to 105 °C. The pressure is from 1 to 150 bar, preferably from 10 to 100 bar.

The slurry polymerisation may be conducted in any known reactor used for slurry polymerisation. Such reactors include a continuous stirred tank reactor and a loop reactor. It is especially preferred to conduct the polymerisation in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

It is sometimes advantageous to conduct the slurry polymerisation above the critical temperature and pressure of the fluid mixture. Such operation is described in US-A-5391654. In such operation the temperature is typically from 85 to 110 °C, preferably from 90 to 105 °C and the pressure is from 40 to 150 bar, preferably from 50 to 100 bar.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460.

If the low molecular weight ethylene polymer is produced in slurry polymerisation stage then hydrogen is added to the slurry reactor so that the molar ratio of hydrogen to ethylene in the reaction phase is from 0.1 to 1.0 mol/kmol, and preferably from 0.2 to 0.7 mol/kmol. Comonomer may then also be introduced into the slurry polymerisation stage so that the molar ratio of comonomer to ethylene in the reaction phase does not exceed 150 mol/kmol, and preferably not 50 mol/kmol. Especially preferably no comonomer is introduced into the slurry polymerisation stage.

If the high molecular weight ethylene polymer is produced in slurry polymerisation stage then hydrogen is added to the slurry reactor so that the molar ratio of hydrogen to ethylene in the reaction phase is at most 0.1 mol/kmol, preferably from 0.01 to 0.07 mol/kmol. Especially preferably, no hydrogen is introduced into the slurry polymerisation stage. Comonomer is introduced into the slurry polymerisation stage so that the molar ratio of comonomer to ethylene is from 50 to 200 mol/kmol, preferably from 70 to 120 mol/kmol.

The polymerisation may also be conducted in gas phase. In a fluidised bed gas phase reactor an olefin is polymerised in the presence of a polymerisation catalyst in an upwards moving gas stream. The reactor typically contains a fluidised bed comprising the growing polymer particles containing the active catalyst located above a fluidisation grid.

The polymer bed is fluidised with the help of the fluidisation gas comprising the olefin monomer, eventual comonomer(s), eventual chain growth controllers or chain transfer agents, such as hydrogen, and eventual an inert gas. The fluidisation gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871.

From the inlet chamber the gas flow is passed upwards through a fluidisation grid into the fluidised bed. The purpose of the fluidisation grid is to divide the gas flow evenly through the cross-sectional area of the bed. Sometimes the fluidisation grid may be arranged to establish a gas stream to sweep along the reactor walls, as disclosed in WO-A-2005/087361. Other types of fluidisation grids are disclosed, among others, in US-A-4578879, EP-A-600414 and EP-A-721798. An overview is given in Geldart and Bayens: The Design of Distributors for Gas-fluidized Beds, Powder Technology, Vol. 42, 1985.

The fluidisation gas passes through the fluidised bed. The superficial velocity of the fluidisation gas must be higher that minimum fluidisation velocity of the particles contained in the fluidised bed, as otherwise no fluidisation would occur. On the other hand, the velocity of the gas should be lower than the onset velocity of pneumatic transport, as otherwise the whole bed would be entrained with the fluidisation gas. The minimum fluidisation velocity and the onset velocity of pneumatic transport can be calculated when the particle characteristics are know by using common engineering practise. An overview is given, among others in Geldart: Gas Fluidization Technology, J.Wiley & Sons, 1986.

When the fluidisation gas is contacted with the bed containing the active catalyst the reactive components of the gas, such as monomers and chain transfer agents, react in the presence of the catalyst to produce the polymer product. At the same time the fluidisation gas removes the reaction heat from the polymerising particles in the fluidised bed.

The unreacted fluidisation gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerisable components, such as n-pentane, isopentane, n-butane or isobutene, which are at least partially condensed in the cooler.

The gas is then compressed, cooled and recycled into the inlet chamber of the reactor. Prior to the entry into the reactor fresh reactants are introduced into the fluidisation gas stream to compensate for the losses caused by the reaction and product withdrawal. It is generally known to analyse the composition of the fluidisation gas and introduce the gas components to keep the composition constant. The actual composition is determined by the desired properties of the product and the catalyst used in the polymerisation.

The catalyst may be introduced into the reactor in various ways, either continuously or intermittently. Among others, WO-A-01/05845 and EP-A-499759 disclose such methods. Where the gas phase reactor is a part of a reactor cascade the catalyst is usually dispersed within the polymer particles from the preceding polymerisation stage. The polymer particles may be introduced into the gas phase reactor as disclosed in EP-A-1415999 and WO-A-00/26258.

The polymeric product may be withdrawn from the gas phase reactor either continuously or intermittently.

Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

The top part of the gas phase reactor may include a so called disengagement zone. In such a zone the diameter of the reactor is increased to reduce the gas velocity and allow the particles that are carried from the bed with the fluidisation gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed level.

Also antistatic agent(s) may be introduced into the gas phase reactor if needed. Suitable antistatic agents and methods to use them are disclosed, among others, in US-A-5026795, US-A-4803251, US-A-4532311, US-A-4855370 and EP-A-560035. They are usually polar compounds and include, among others, water, ketones, aldehydes and alcohols.

The reactor may also include a mechanical agitator to further facilitate mixing within the fluidised bed. An example of suitable agitator design is given in EP-A-707513.

If the low molecular weight ethylene polymer is produced in gas phase polymerisation stage then hydrogen is added to the gas phase reactor so that the molar ratio of hydrogen to ethylene is from 0.5 to 1.5 mol/kmol, and preferably from 0.7 to 1.3 mol/kmol. Comonomer may then also be introduced into the gas phase polymerisation stage so that the molar ratio of comonomer to ethylene does not exceed 20 mol/kmol, and preferably not 15 mol/kmol. Especially preferably no comonomer is introduced into the gas phase polymerisation stage.

If the high molecular weight ethylene polymer is produced in gas phase polymerisation stage then hydrogen is added to the gas phase reactor so that the molar ratio of hydrogen to ethylene is at most 0.4 mol/kmol, preferably at most 0.3 mol/kmol. Comonomer is introduced into the gas phase polymerisation stage so that the molar ratio of comonomer to ethylene is typically up to 50 mol/kmol, e.g. from 2 to 50 mol/kmol or e.fg. from 5 to 50 mol/kmol, as well known depending on the targeted density.

Prepolymerisation may precede the actual polymerisation step(s), as well known in the field. Then the catalyst, preferably a single site catalyst, is fed to the prepolymerisation step and after said step the obtained reaction mixture together with the catalyst is then fed to the actual polymerisation step(s). In case of a multistage polymerisation, the reaction mixture together with the catalyst which is obtained from the previous polymerisation zone, e.g. a reactor, is then fed to the subsequent polymerisation step to a subsequent reaction zone, e.g. a reactor.

The preferred polymerisation is the multistage polymerisation, wherein the LMW polymer (A) is preferably polymerised in a slurry, such as loop, reactor and the obtained reaction product together with the catalyst, preferably single site catalyst, is then preferably transferred to a gas phase reactor for polymerising the HMW polymer (B) in the presence of said LMW polymer (A). The polymerisation of each stage is preferably carried out as described above. The prepolymerisation may precede the actual polymerisation steps.

Homogenisation and pelletisation

The Polymer composition comprising the multimodal PE copolymer is homogenised and pelletised using a method known in the art. Preferably, a twin screw extruder is used. Such extruders are known in the art and they can be divided in co-rotating twin screw extruders, as disclosed in WO-A-98/15591, and counter-rotating twin screw extruders, as disclosed in EP-A-1600276 In the co-rotating twin screw extruder the screws rotate in the same direction whereas in the counter-rotating extruder they rotate in opposite directions. An overview is given, for example, in Rauwendaal: Polymer Extrusion (Hanser, 1986), chapters 10.3 to 10.5, pages 460 to 489. Especially preferably a counter-rotating twin screw extruder is used.

To ensure sufficient homogenisation of the Polymer composition during the extrusion the specific energy input must be on a sufficiently high level, but not excessive, as otherwise degradation of polymer and/or additives would occur. The required SEI level depends somewhat on the screw configuration and design and are within the skills of the iskilled person. Suitable levels of specific energy input (SEI) are from 200 to 300 kWh/ton, preferably from 210 to 290 kWh/ton.

Polymer composition

Typically the polymer composition comprises at least 50 % by weight of the multimodal PE copolymer, preferably from 80 to 100 % by weight and more preferably from 85 to 100 % by weight, based on the total weight of the composition. The preferred Polymer composition consists of PE copolymer. The expression means that the Polymer composition does not contain further polymer components, but the multimodal PE copolymer as the sole polymer component. However, it is to be understood herein that the Polymer Composition may comprise further components such as additives which may optionally be added in a mixture with a carrier polymer, i.e. in so called master batch.

The polymer composition may thus contain further additives such as additives conventionally used in W&C applications. Part or all of the optional additives can be added e.g. to the PE copolymer before the above described homogenisation and pelletisation step to obtain the Polymer composition. As an equal alternative, part or all of the optional additives can be added to the Polymer composition after the pelletisation step before or during the preparation process of an article, preferably a Cable, thereof. The additives may be used in conventional amounts.

For instance, Polymer composition may be crosslikable and contains a crosslinking additive, such as a free radical generating agent for crosslinking via radical reaction, or e.g. a silanol condensation catalyst for crosslink9ing via hydrolysable silane groups. Preferably, the crosslinking agent contains -O-O- bond or -N=N-bond, more preferably is a peroxide, preferably organic peroxide, such as 2,5-di(tert-butylperoxy)-2,5-dimethylhexane, di(tert-butylperoxyisopropyl) benzene, dicumylperoxide, tert-butylcumylperoxide, di(tert-butyl)peroxide, or mixtures thereof, however without limiting thereto.

Further non-limiting examples of additive(s) for W&C applications include antioxidant(s), stabiliser(s), scorch retardant agent(s), processing aid(s), flame retardant additive(s), water tree retardant additive(s), acid scavenger(s), crosslinking booster(s), inorganic filler(s), such as carbon black, and voltage stabilizer(s).

Cable and cable manufacture

The at least one layer of the Cable comprises at least the Polymer Composition as defined above or below. The Cable layer(s) may also comprise a blend of the Polymer composition together with one or more different Polymer composition(s) and/or with further polymer components.
The Cable is preferably selected from

- a communication cable for communication applications comprising one or more wires surrounded by at least one layer, which is preferably an insulation layer, and the one wire or a bundle of the two or more wires is then surrounded by at least a sheath layer, which is also called as a jacketing layer and which forms the outermost polymeric layer for protecting the one or more wires, or from
- a power cable, which comprises a conductor surrounded by at least one layer, preferably at least an insulation layer and a jacketing layer, in that order,

wherein at least one layer comprises the Polymer composition as defined above or in claims below. The communication and power cable have a well known meaning in the W&C field.

A communication cable is a cable for transferring information signals like telecommunication cables or coaxial cables. A telecommunication cable comprises a plurality of telesingle wires each surrounded by an insulation composition, typically an insulation layer. The number of telesingle wires may vary from a few in a data transmission cable to up to several thousands in telephone cables. All these wires are then surrounded by a common protective sheath layer, also called as jacketing layer, which surrounds and protects the wire bundle. Preferably the sheath layer comprises, preferably consists of the polymer composition of the invention.

A coaxial cable has typically one centre conductor and at least one outer concentric conductor. If more than one outer conductor is used, e.g. triaxial cables, they are separated by an electrically isolating layer. Also the coaxial cables are surrounded by at least a sheath, also called jacketing, layer. The sheath layer preferably comprises, more preferably consists of, the polymer composition of the invention.

A power cable is a cable transferring energy operating at any voltage, typically operating at voltages higher than 220 V. The voltage applied to the power cable can be alternating (AC), direct (DC), or transient (impulse). The Polymer composition is also very suitable for layers of power cables such as low voltage (LV) (e.g. 1 kV cables), medium voltage (MV), high voltage (HV) and extra high voltage (EHV) power cables, which terms have well known meaning and indicate the operating level of such cable.

The preferable MV, HV and EHV Cable embodiment of the invention comprises at least an inner semiconductive layer, insulation layer, an outer semiconductive layer and optionally, and preferably, a jacketing layer, in that order, wherein at least one of said layers, preferably at least the jacketing layer, comprises, preferably consists of, said Polymer composition of the invention.

The preferable 1 kV cable embodiment of the invention compromises at least an insulation layer and optionally a bedding layer and optionally and preferably, a jacketing layer, in that order, wherein at least one of said layers, preferably at least the jacketing layer, comprises, preferably consist of, said Polymer compostion of the invention.

The said at least one layer of the Cable comprising the Polymer composition as defined above or in claims below is very preferable a jacketing layer.

Cables according to the present invention can be produced according to the methods known in the art using the polymer composition as described above.

Accordingly, the invention also provides a process for producing a Cable, which process comprises steps of a) applying on a conductor one or more layers by using the Polymer composition as defined above and below.

The process for producing a Cable, such as a communication or power cable, as defined above and below, comprises melt mixing, i.e. blending the Polymer composition as defined above, including the subgroups and embodiments thereof, optionally with other polymer components and optionally with additives, above the melting point of at least the major polymer component(s) of the obtained mixture, and (co)extruding the obtained melt mixture on a conductor for forming one or more polymer layer(s), wherein at least one contains the Polymer composition. Melt mixing is preferably carried out in a temperature of 20-25°C above the melting or softening point of polymer component(s). Preferably, said Polymer composition is used in form of pellets which are added to the mixing step and melt mixed. The additives may be added before or during the Cable manufacturing process. The processing temperatures and devices are well known in the art, e.g. conventional mixers and extruders, such as single or twins screw extruders, are suitable for the process of the invention.

The Cable can be crosslinkable, wherein at least one of the layers can be crosslinked to provide a crosslinked Cable. Invention provides also a Cable which is crosslinkable and a crosslinked Cable.

Accordingly, the Cable manufacture process comprises optionally a further subsequent step of b) crosslinking a crosslinkable polymer, e.g. a crosslinkable Polymer composition, in at least one cable layer of the obtained Cable, wherein the crosslinking is effected in the presence of a crosslinking agent, which is preferably a peroxide. Typically the crosslinking temperature is at least 20°C higher than the temperature used in meltmixing step and can be estimated by a skilled person.

Usable manufacturing and crosslinking processes and devices are known and well documented in the literature.

**Determination methods**

Unless otherwise stated the following methods were used for determining the properties of the PE copolymer as given in the description or in the experimental part and claims below. Unless otherwise stated, the samples used in the tests consist of the polymer composition to be tested.

Melt index

The melt flow rate (MFR) is determined according to ISO 1133 and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

The quantity FRR (flow rate ratio) is an indication of molecular weight distribution and denotes the ratio of flow rates at different loads. Thus, $FRR_{21/2}$ denotes the value of $MFR_{21}/MFR_2$.

Comonomer Content (NMR)

13C-NMR analysis was used to determine the comonomer content of the samples. Samples were prepared by dissolving approximately 0.100 g of polymer and 2.5 ml of solvent in a 10 mm NMR tube. The solvent was a 90/10 mixture of 1,2,4-trichlorobenzene and benzene-d6. Samples were dissolved and homogenised by heating the tube and its contents at 150 C in a heating block.

The proton decoupled carbon-13 single pulse NMR spectra with NOE were recorded on a Joel ECX 400 MHz NMR spectrometer. The acquisition parameters used for the experiment included a flip-angle of 45 degrees, 4 dummy scans, 3000 transients and a 1.6 s acquisition time, a spectral width of 20kHz, temperature of 125 C, WALTZ decoupling and a relaxation delay of 6.0 s. The processing parameters used included zero-filling to 32k data points and apodisation using an exponential window function with in 1.0 Hz artificial line broadening followed by automatic zeroth and first order phase correction and automatic baseline correction.

Comonomer contents were calculated using integral ratios taken from the processed spectrum using the assignments described in JC. Randall's work (JMS - Rev. Macromol. Chem. Phys., C29(2&3), 201-317 (1989) using:

$$E = (\alpha B + \alpha H + \beta B + \beta H + \gamma B + \gamma H + \delta++)/2$$

$$B = (\text{methine } B + 2B + 1B)/3$$

$$H = (\text{methine } H + 4H + 3H + 2H)/4$$

where methine is the CH branch site, alpha, beta, gamma the carbon sits adjacent to the CH i.e. CH, alpha, beta, gamma, delta delta. \delta++ is the bulk CH2 site and the 1,2,3 and 4 sites representing the various carbon sites along the branch with the methyl group being designated 1.

$$CE = 100\% * E/(E+B+H)$$

$$CB = 100\% * B/(E+B+H)$$

$$CH = 100\% * H/(E+B+H)$$

Density

Density of the polymer was measured according to ISO 1183 / 1872-2B.

For the purpose of this invention the density of the blend can be calculated from the densities of the components according to:

$$\rho_b = \sum_i w_i \cdot \rho_i$$

where $\rho_b$ is the density of the blend,

$w_i$ is the weight fraction of component "i" in the blend and
$\rho_i$ is the density of the component "i".

Molecular weight

Mz, Mw, Mn, and MWD are measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight; Mz is the z-average molecular weight) is measured according to ISO 16014-4:2003 and ASTM D 6474-99. A Waters GPCV2000 instrument, equipped with refractive index detector and online viscosimeter was used with 2 x GMHXL-HT and 1 x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

Flexural Modulus

Flexural modulus was determined according to ISO 178:1993. The test specimens were 80 x 10 x 4.0 mm (length x width x thickness). The length of the span between the supports was 64 mm, the test speed was 2 mm/min and the load cell was 100 N. The equipment used was an Alwetron TCT 25.

CTL (Constant-tensile-stress method)

CTL was determined by using a method similar to ISO 6252:1992 as follows.
The samples are prepared by pressing a plaque at 180 °C and 10 MPa pressure with a total length of 125 to 130 mm and a width at its ends of 21 $\pm$ 0.5 mm. The plaque then is milled into the correct dimensions in a fixture on two of the sides with a centre distance of both holders of 90 mm and a hole diameter of 10 mm. The central part of the plaque has a parallel length of 30 $\pm$ 0.5 mm, a width of 9 $\pm$ 0.5 mm, and a thickness of 6 $\pm$ 0.5 mm.
A front notch of 2.5 mm depth is then cut into the sample with a razor blade fitted into a notching machine (PENT-NOTCHER, Norman Brown engineering), the notching speed is 0.2 mm/min. On the two remaining sides side grooves of 0.8 mm are cut which should be coplanar with the notch. After making the notches, the sample is conditioned in 23 $\pm$1°C and 50 % relative humidity for at least 48 h. The samples are then mounted into a test chamber in which the active solution (10 % solution of IGEPAL CO-730 in deionised water, chemical substance: 2-(4-nonyl-phenoxy)ethanol) is kept at 60 °C temperature. The samples are loaded with a dead weight corresponding to an initial stress of about 5 MPa and at the moment of breakage an automatic timer is shut off. The average of at least two measurements is reported.
The sample and the notch applied to the sample are shown in Figure 1, in which:

A: total length of the specimen 125 to 130 mm
B: distance between the centre points of the holders 90 mm
C: width of the specimen at the end 21 $\pm$ 0.5 mm
D: hole diameter 10 mm
E: side grooves 0.8 mm
F: thickness of plaque 6 $\pm$ 0.2 mm
G: width of narrow parallel part 9 $\pm$ 0.5 mm
H: main notch 2.5 $\pm$ 0.02 mm

The length of the narrow section of the specimen was 30 $\pm$ 0.5 mm.

Die Swell:

The determination method was done according to ASTM D 3835-02 *Standard Test Method for Determination of Properties of Polymeric Materials by Means of Capillary Rheometer,* however, with the below indicated exceptions in terms of equipment used, method for sample (extrudate strand) preparation and calculation of the average strand diameter. The method and equipment used for extrudate strand sample preparation, as well as the procedure for determination of the die swell is described bellow. The evaluation of die swell is carried out by measuring, at room temperature, the diameter of a strand, previously prepared by extrusion at 190°C using Davenport model 7, MFR tester. The extrusion of the strand to be measured is done using a die with a length to diameter ratio of 3,819 (L/D = 8,000/2,095 mm/mm) and applying a load of 2,16 kg. After cooling to room temperature, several strands with a length of 2,5 to 3 cm are cut from an extrudate which is 5 mm away from the die exit. The strand diameter is measured at two points approximately 90° apart from each other using an analogue micrometer from Oditest. The average diameter is calculated from 3 different strands. The die swell, $d_{swell}$ is defined as the ratio between the average diameter of the strand, $d_{strand}$, measured at room temperature, and the diameter of the die used for extrusion, $d_{die}$.

Taber abrasion:

Measurement according to ASTM D4060 using abrasion produced by Taber Abraser 5151 (230V, Taber Industries).
The sample is a molded disc prepared by pressing 2 mm disc. The samples were conditioned for 24 h at 23 $\pm$2°C at relative humidity of 50 $\pm$ 5%. Test at: Load 1000g, Abrasive wheel CS-10, 24°C, 62% relative humidity.

Shore hardness (Shore D):

Shore D hardness was determined according to ISO 868-2003. The measurement was done on round disks having a diameter of 35 mm and thickness of 4 mm and which were punched from compression moulded sheets having a thickness of 4 mm. The sheet was moulded according to ISO 1872-2 at 180 °C with a cooling rate 15 °C/min. Finally, the plaques are conditioned at 23 °C at 50 % relative humidity for at least two days.
Five measurements per sample are made. The measurement points are selected so that there is at least 10 mm distance to the edge of the disc and at least 6 mm distance to the nearest previous measurement point.
During the measurement a specified indenter (type D durometer) is forced into the test specimen under specified conditions (a mass of 5 kg). After 15 s the mass is removed, and the depth of penetration is measured.

Stress at break and Strain at break:

Stress at break and Strain at break are measured according to ISO 527-1:1993 using a sample prepared according ISO527-2: 1993
Stress at break tensile tester: Alwetron TCT10, Lorentzen&WettreAB
Draw speed: 50mm/min
sample length: 50mm
sample geometry: extruded jacketing, conductor removed; opened flat, thickness 1 mm.

**Experimental part:**

**Catalyst 1**

The catalyst complex used in the polymerisation examples was bis(n-butylcyclopentadienyl) hafnium dibenzyl, ((n-BuCp)$_2$Hf(CH$_2$Ph)$_2$), and it was prepared according to "Catalyst Preparation Example 2" of WO2005/002744, starting from bis(n-butylcyclopentadienyl) hafnium dichloride (supplied by Witco).
12,4 kg of 30 wt% methylalumoxane in toluene (MAO, supplied by Albemarle), 281 gr of (n-BuCp)$_2$Hf(CH$_2$Ph)$_2$ in toluene (67.9 wt%, supplied by Degussa) and 3,6 kg of toluene were mixed for 2 hours at 40 rpm at room temperature. Reactor was carefully flushed with toluene prior to reaction.
The resulting solution was then transferred to a 160L reactor onto 10.0 kg activated silica (commercial silica carrier, XPO2485A, having an average particle size 20 $\mu$m, supplier: Grace, calcined at 600°C for 4 hours) and mixed at 40 rpm for 2 hours at 20°C.
The catalyst was dried with 15 rpm mixing under nitrogen purge at 60°C for 2 hours, and thereafter dried with vacuum at 65°C for 4 hours.
The obtained catalyst had an Al/Hf mol-ratio of 200, an Hf-concentration of 0.33 wt% and an Al-concentration of 11.2 wt%.

**Catalyst 2**

Preparation of the catalyst

The catalyst complex used in the polymerisation examples was bis(n-butylcyclopentadienyl) hafnium dibenzyl, ((n-BuCp)$_2$Hf(CH$_2$Ph)$_2$), and it was prepared according to "Catalyst Preparation Example 2" of WO2005/002744, starting from bis(n-butylcyclopentadienyl) hafnium dichloride (supplied by Witco).
The catalyst preparation was made in a 160 L batch reactor into which a metallocene complex solution was added. Mixing speed was 40 rpm during reaction and 20 rpm during drying. Reactor was carefully flushed with toluene prior to reaction and purged with nitrogen after silica addition

**Activated catalyst system**

10.0 kg activated silica (commercial silica carrier, XPO2485A, having an average particle size 20 $\mu$m, supplier: Grace) was slurried into 21.7 kg dry toluene at room temperature. Then the silica slurry was added to 14.8 kg of 30 wt% methylalumoxane in toluene (MAO, supplied by Albemarle) over 3 hours. Afterwards the MAO/silica mixture was heated to 79°C for 6 hours and then cooled down to room temperature again.
The resulting solution was reacted with 0.33 kg of (n-BuCp)$_2$Hf(CH$_2$Ph)$_2$ in toluene (67.9 wt%) for 8 hours at room temperature.
The catalyst was dried under nitrogen purge for 5.5 hours at 50°C.
The obtained catalyst had an Al/Hf mol-ratio of 200, an Hf-concentration of 0.44 wt% and an Al-concentration of 13.2 wt%.

**Inventive Example 1:**

Two-stage polymerisation

A loop reactor having a volume of 500 dm$^3$ was operated at 83 °C and 59 bar pressure. Into the reactor were introduced 89 kg/h of propane diluent and 32 kg/h ethylene. In addition, polymerisation catalyst 1 prepared according to the description above was introduced into the reactor so that the polymerisation rate was 27 kg/h and the conditions in the reactor as shown in Table 1.

The polymer slurry was withdrawn from the loop reactor and transferred into a flash vessel operated at 3 bar pressure and 70 °C temperature where the hydrocarbons were substantially removed from the polymer. The polymer was then introduced into a gas phase reactor operated at a temperature of 80 °C and a pressure of 20 bar. In addition 87 kg/h ethylene, 1 kg/h 1-hexene and 0.11 g/h hydrogen was introduced into the reactor. The conditions are shown in Table 1.

The multimodal PE copolymer of inventive example 2 was prepared analogously to example 1 as described in Ex.1, but using the catalyst 2, the amounts of materials and conditions in the reactors as given in Table 1.

Table 1: Experimental conditions and data

| Example | | Inv.Ex. 1 | Inv. Ex.2 |
|---|---|---|---|
| catalyst | type | Cat.1 | Cat. 2 |
| **Loop reactor** | | | |
| Temperature | °C | 83 | 85 |
| Pressure | bar | 59 | 58 |
| C2 concentration | mol-% | 7,9 | 9,0 |
| H2/C2 ratio | mol/kmol | 0 | 0,17 |
| production rate | kg/h | 27 | 31 |
| split | wt-% | 50 | 50 |
| comonomer | | homopol | Homopol |
| MFR2 | g/10min | 5,8 | 9,3 |
| density | kg/m3 | 967 | 963 |
| **Gas phase reactor** | | | |
| temperature | °C | 80,0 | 80 |
| pressure | bar | 20 | 20 |
| C2 conc. | mol-% | 55 | 55 |
| H2/C2 ratio | mol/kmol | 0,1 | |
| C6/C2 ratio | mol/kmol | 5 | 6 |
| production rate | kg/h | 28 | 30 |
| split | wt-% | 50 | 50 |
| comonomer | | 1-hexene | 1-hexene |
| Calculated density of GPR component | kg/m3 | 925 | 929 |
| **Final polymer** powder after GPR | | | |
| MFR2 | g/10min | 0,5 | |
| MFR5 | g/10min | 1,3 | 1,5 |
| Density base resin | kg/m3 | 944 | 947 |

The polymer of inv.example 1 was stabilised with 3000 ppm of Irganox B225 and 1500 ppm Ca-stearate and then the obtained polymer composition was extruded to pellets in a counter-rotating twin screw extruder CIM90P (manufactured by Japan Steel Works) at following conditions: throughput 221 kg/h, screw speed 350 rpm, SEI 264 kWh/kg, melt temperature 216°C. The density of the obtained Polymer composition was 946 kg/m$^3$.

Comparative examples:

C.E.1= commercial grade of a unimodal polyethylene copolymer (hexene as comonomer) produced using Cr-catalyst, supplier Borealis

C.E.2= commercial grade of a bimodal polyethylene copolymer (butene as comonomer) produced using a Ziegler-Natta catalyst, supplier Borealis

The properties of polymer composition of Ex.1 and Ex.2 of the invention and of the C.E.1 and 2 are given in the table 2:

| | Ex.1 of the invention | Ex.2 of the invention | C.E.1 | C.E.2 |
|---|---|---|---|---|
| | Polymer composition (pellets) | Final polymer (Powder) | | |
| Density, kg/m3 | 946 | 947 | 939 | 946 |
| MFR2, g/10 min | 0,4 | | 0,25 | 0,5 |
| MFR5, g/10 min | 1,3 | 1,5 | | |
| Flexural modulus, MPa | 910 | | 760 | 995 |
| Taber abrasion, CS-10 wheel, mg/1000 cycles | 6,1 | | 8,8 | 9,3 |

| CTL at 5 MPa | 74 | | 14 | 26 |
|---|---|---|---|---|
| shore D 3s | 58,4 | | 60,1 | 60,6 |
| die swell [mm/diameter to %] | 8 | | 43 | 25 |
| stress at break (MPa) | 454 | | 35 | 368 |
| strain at break (%) | 857 | | 953 | 863 |

**Table 3:** Diameter of Al conductor: 3 mm, Line speed 55m/min, length of samples 15 m, cooling at 23°C

| Identification: | | | Ex.1 | C.E.1 | C.E.2 |
|---|---|---|---|---|---|
| **Extr. 2** | | | | | |
| **Extr. Temp. °C in Screw** | | | | | |
| **Extr. Temp. Zon 1** | | °C | 180 | 180 | 180 |
| **Extr. Temp. Zon 2** | | °C | 200 | 200 | 200 |
| **Extr. Temp. Zon 3** | | °C | 220 | 220 | 220 |
| **Extr. Temp. Zon 4** | | °C | 230 | 230 | 230 |
| **Extr. Temp. Zon 5** | | °C | 240 | 240 | 240 |
| **Extr. Temp. Neck** | | °C | 240 | 240 | 240 |
| **Extr. Temp. Head** | | °C | 240 | 240 | 240 |
| **Neck** | | °C | 240 | 240 | 240 |
| **Melt temp**. | | °C | | | |
| **Extruder** | | amp | | 58 | 56 |
| **Diamete**r | | mm | 5 | 5 | 5 |
| **Conduct. temp.** | | °C | 23 | 23 | 23 |
| | | | | | |
| **Cooling bath** | | °C | 23 | 23 | 23 |
| **Air gap** | | cm | 100 | 100 | 100 |

**Claims**

1. A cable comprising a conductor surrounded by one or more layers, wherein at least one layer comprises a polymer composition comprising a multimodal copolymer of ethylene with one or more comonomers, wherein the multimodal ethylene copolymer has a density of from 940 to 977 kg/m$^3$, and an CTL at 5 MPa of at least 30 hours.

2. The cable according to claim 1, wherein the multimodal ethylene copolymer has a melt index MFR$_2$ of from 0.1 to 5.0 g/10 min, preferably of from 0.1 to 2.5 g/10 min, preferably of from 0.2 to 2.5 g/10 min, more preferably of from 0.3 to 2.0 g/10 min, and more preferably of from 0.3 to 1.0 g/10 min.

3. The cable according to claim 1 or claim 2, wherein the multimodal ethylene copolymer has an CTL (5 MPa) of at least 40 h, preferably of at least 50 h, more preferably of at least 60 h to, more preferably of from 65 to 10 0000.

4. The cable according to any one of the preceding claims, wherein the comonomer(s) are selected from alpha-olefins having from 3 to 16 carbon atoms, preferably having from 4 to 10 carbon atoms.

5. The cable according to any one of the preceding claims wherein the multimodal copolymer comprises:

(A) from 30 to 70 % by weight, based on the combined amount of components (A) and (B), of a low molecular weight (LMW) ethylene polymer selected from ethylene homopolymer and a copolymer of ethylene and one or more alpha-olefins having from 3 to 20 carbon atoms; and
(B) from 30 to 70 % by weight, based on the combined amount of components (A) and (B), of a high molecular weight (HMW) copolymer of ethylene and one or more alpha-olefins having from 3 to 20 carbon atoms.

6. The cable according to claim 4, wherein the low molecular weight ethylene polymer (A) is an ethylene homopolymer and has preferably and a density of from 960 to 977 kg/m$^3$, and the high molecular weight ethylene copolymer of ethylene (B) has a density of from 890 to 930 kg/m$^3$, preferably of from 900 to 930 kg/m$^3$.

7. The cable according to claim 4 or claim 5 wherein the high molecular weight copolymer (B) is a copolymer of ethylene and one or more alpha-olefins having from 4 to 10, preferably 4 to 8 carbon atoms.

8. The cable according to any one of the preceding claims, wherein the multimodal ethylene copolymer is obtainable by polymerising ethylene in the presence of a single site catalyst and an activator for said catalyst, preferably a multimodal ethylene copolymer which comprises a low molecular weight ethylene homopolymer (A) and a high molecular weight ethylene copolymer (B), and is obtainable by polymerising ethylene in the presence of a single site catalyst and an activator for said catalyst.

9. The cable according to any one of the preceding claims **characterized in that** the multimodal ethylene copolymer of the polymer composition has at least one, preferably two or more, in any combination, of the following properties:

(i) Density of more than 941 kg/m$^3$, preferably of from 942 to 960 kg/m$^3$, preferably of from 942 to 950 kg/m$^3$,
(ii) Die swell of 20 % or less, preferably of 10 % or less,
(iii) Flexural modulus of less than 990 MPa, preferably of less than 950 MPa, more preferably from 400 to 930 MPa,
(iv) Stress at break of more than 390 MPa, preferably of more than 400 MPa,
(v) MWD (Mw/Mn) of from 1.5 to 30, preferably of from 2 to 25, more preferably of from 3.0 to 20, more preferably from of from 4 to 17, or
(vi) MFR$_2$ of the LMW ethylene homopolymer of the multimodal ethylene copolymer of from 4.0 to 400 g/10 min, preferably of from 4.0 to 300 g/10 min, more preferably of from 4.0 to 200 g/10 min;

preferably all of the above properties (i) to (vi).

10. The cable according to any one of the preceding claims, wherein the layer comprising the polymer composition, which comprises said multimodal copolymer of ethylene, is a jacketing layer.

11. A process for producing a cable comprising applying, preferably coextruding, one or more layers on a conductor, wherein at least one layer is formed from the polymer composition as claimed in any of the preceding claims.

12. The process according to claim 11, wherein at least a jacketing layer is formed from the polymer composition of any of the preceding claims.

13. A polymer composition comprising a multimodal copolymer of ethylene with one or more comonomers, wherein the multimodal ethylene copolymer has a density of from 940 to 977 kg/m$^3$, a CTL at 5 MPa of at least 30 hours and, additionally,

a) an MFR$_2$ of from 0.2 to 2.5 g/10 min, or
b) a die swell of 20 % or less, or

both a) an $MFR_2$ of from 0.2 to 2.5 g/10 min and b) a die swell of 20 % or less.

14. The polymer composition according to claim 13, wherein the multimodal ethylene copolymer comprises:

(A) from 40 to 60 % by weight, based on the combined amount of components (A) and (B), of a low molecular weight (LMW) ethylene polymer which is selected from ethylene homopolymer and a copolymer of ethylene and one or more alpha-olefins having from 3 to 20 carbon atoms, preferably from ethylene homopolymer, and which

- has preferably a weight average molecular weight of from 5000 to 150000 g/mol, preferably 5000 to 130000 g/mol, preferably from 10000 to 100000 g/mol, and
- has preferably a density of from 960 to 977 $kg/m^3$; and

(B) from 40 to 60 % by weight, based on the combined amount of components (A) and (B), of a high molecular weight (HMW) copolymer of ethylene and one or more alpha-olefins having from 3 to 20 carbon atoms, which

- has preferably a weight average molecular weight of from 100000 to 1000000 g/mol, preferably from 130000 to 500000 g/mol, more preferably from 150000 to 500000 g/mol, and
- has preferably a density of from 890 to 930 $kg/m^3$, preferably of from 900 to 930 $kg/m^3$.

15. The polymer composition according to claim, wherein the multimodal ethylene copolymer has the density of more than 942 $kg/m^3$, preferably of from 942 to 960 $kg/m^3$, preferably of from 942 to 950 $kg/m^3$, a CTL (5 MPa) of at least 40 h, preferably of at least 50 h, more preferably of from 60 to 70000 h, more preferably of from 65 to 5000 h and, additionally, has

a) an $MFR_2$ of from 0.3 to 2.0 g/10 min, preferably from 0.3 to 1.0 g/10 min or
b) a die swell of 10 % or less, more preferably both a) an $MFR_2$ of from 0.3 to 2.0 g/10 min, preferably from 0.3 to 1.0 g/10 min and b) a die swell of 10 % or less.

16. The polymer composition according to any of the preceding claims, wherein the multimodal ethylene copolymer of the polymer composition has at least one, preferably two or more, in any combination, of the following properties:

(i) Flexural modulus of less than 990 MPa, preferably less than 950 MPa, more preferably from 400 to 930 MPa,
(ii) Stress at break of more than 390 MPa, preferably more than 400 MPa,
(iii) MWD (Mw/Mn) of 1.5 to 30, preferably of from 2 to 25, more preferably of from 3.0 to 20, more preferably from of from 4 to 17, or
(iv) The one or more comonomer(s) of (LMW) ethylene copolymer (A) and the (HMW) ethylene copolymer (B) of the multimodal ethylene copolymer are selected from one or more alpha-olefin having from 4 to 10, preferably from
4 to 8 carbon atoms;
(v) the (LMW) ethylene copolymer (A) of the multimodal ethylene copolymer is a (LMW) homopolymer of ethylene and has $MFR_2$ of 4.0 to 400 g/10 min, preferably of from 4.0 to 300 g/10 min, more preferably of from 4.0 to 200 g/10 min, or
(vi) the multimodal ethylene copolymer is obtainable by polymerising ethylene in the presence of a single site catalyst and an activator for said catalyst;

- preferably the multimodal ethylene copolymer has all of the above properties (i) to (vi).

17. The use of the polymer composition according to any one of claims 13 to 16 for producing cables, preferably for producing a cable layer, preferably a jacketing layer.

Figure 1.

**EUROPEAN SEARCH REPORT**

Application Number

EP 08 16 8047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/067654 A (BOREALIS TECH OY [FI]; JOHANSSON SLOVEIG [SE]; LIND CHRISTER [SE]; RYD) 12 August 2004 (2004-08-12) * page 1, line 9; example 1 * ----- | 1-17 | INV. H01B3/44 C08L23/08 C08F210/16 |
| X | WO 2006/053740 A (BASELL POLYOLEFINE GMBH [DE]; VOGT HEINZ [DE]; BERTHOLD JOACHIM [DE]) 26 May 2006 (2006-05-26) * page 2, line 15 - line 21 * * page 3, line 5 - line 14; example 1; table 1 * ----- | 1-7,9-15 | |
| X | WO 99/65039 A (BOREALIS POLYMERS OY [FI]; ROGESTEDT LAILA [SE]; MARTINSSON HANS BERTI) 16 December 1999 (1999-12-16) * abstract; claims 1-12; tables 1,2 * ----- | 1-7,9-15 | |
| X | WO 02/086916 A (BOREALIS TECH OY [FI]; MARTINSSON HANS-BERTIL [SE]; LAURENSEN PAUL [BE] 31 October 2002 (2002-10-31) * page 6, line 16 - line 21 * * page 8, line 5 - line 31; claims 1-18 * ----- | 1-7,9-15 | |
| X | WO 97/50093 A (UNION CARBIDE CHEM PLASTIC [US]) 31 December 1997 (1997-12-31) * page 3, line 10 - line 15; claims 1-6; examples 1,2; table 1 * ----- | 1-17 | TECHNICAL FIELDS SEARCHED (IPC) H01B C08L C08F |

The present search report has been drawn up for all claims

| Place of search | Date of completion of the search | Examiner |
|---|---|---|
| Munich | 7 April 2009 | Marsitzky, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 16 8047

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2009

| Patent document cited in search report | | Publication date | Patent family member(s) | | Publication date |
|---|---|---|---|---|---|
| WO 2004067654 | A | 12-08-2004 | AT | 329975 T | 15-07-2006 |
| | | | BR | PI0407021 A | 10-01-2006 |
| | | | CA | 2512863 A1 | 12-08-2004 |
| | | | CN | 1745150 A | 08-03-2006 |
| | | | DE | 602004001210 T2 | 19-10-2006 |
| | | | EP | 1587888 A1 | 26-10-2005 |
| | | | ES | 2262114 T3 | 16-11-2006 |
| | | | PT | 1587888 E | 29-09-2006 |
| | | | RU | 2333924 C2 | 20-09-2008 |
| | | | UA | 79678 C2 | 10-07-2007 |
| | | | US | 2007003724 A1 | 04-01-2007 |
| WO 2006053740 | A | 26-05-2006 | AU | 2005306003 A1 | 26-05-2006 |
| | | | DE | 102004055587 A1 | 24-05-2006 |
| | | | EP | 1812509 A1 | 01-08-2007 |
| | | | JP | 2008520779 T | 19-06-2008 |
| | | | US | 2008274353 A1 | 06-11-2008 |
| WO 9965039 | A | 16-12-1999 | AT | 281692 T | 15-11-2004 |
| | | | AU | 741335 B2 | 29-11-2001 |
| | | | AU | 4669199 A | 30-12-1999 |
| | | | BR | 9911159 A | 03-04-2001 |
| | | | CA | 2334789 A1 | 16-12-1999 |
| | | | CN | 1305633 A | 25-07-2001 |
| | | | DE | 69921656 D1 | 09-12-2004 |
| | | | DE | 69921656 T2 | 24-03-2005 |
| | | | EP | 1093658 A1 | 25-04-2001 |
| | | | ES | 2230862 T3 | 01-05-2005 |
| | | | JP | 2002518786 T | 25-06-2002 |
| | | | RU | 2220467 C2 | 27-12-2003 |
| | | | US | 6180721 B1 | 30-01-2001 |
| WO 02086916 | A | 31-10-2002 | AU | 2002237640 A8 | 17-01-2008 |
| WO 9750093 | A | 31-12-1997 | AT | 214196 T | 15-03-2002 |
| | | | AU | 715346 B2 | 20-01-2000 |
| | | | AU | 3488997 A | 14-01-1998 |
| | | | CA | 2259264 A1 | 31-12-1997 |
| | | | DE | 69710908 D1 | 11-04-2002 |
| | | | DE | 69710908 T2 | 25-07-2002 |
| | | | EP | 0935806 A1 | 18-08-1999 |
| | | | ES | 2169865 T3 | 16-07-2002 |
| | | | JP | 2000505233 T | 25-04-2000 |
| | | | JP | 3745777 B2 | 15-02-2006 |
| | | | KR | 20000016537 A | 25-03-2000 |
| | | | TW | 412753 B | 21-11-2000 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 08 16 8047

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2009

| Patent document cited in search report | Publication date | Patent family member(s) | | Publication date |
|---|---|---|---|---|
| WO 9750093 A | | US 5731082 A | | 24-03-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9618662 A
- WO 9728170 A
- WO 9832776 A
- WO 9961489 A
- WO 03010208 A
- WO 03051934 A
- WO 03051514 A
- WO 2004085499 A
- WO 2005002744 A
- EP 1752462 A
- EP 1739103 A
- US 2007049711 A
- EP 1539775 A
- WO 9212182 A
- EP 369436 A
- EP 503791 A
- EP 881237 A
- WO 9903902 A
- EP 782587 A
- EP 1633466 A
- EP 1415999 A
- WO 0026258 A
- US 4582816 A
- US 3405109 A
- US 3324093 A
- EP 479186 A
- US 5391654 A
- US 3374211 A
- US 3242150 A

- EP 1310295 A
- EP 891990 A
- EP 1591460 A
- WO 2007025640 A
- US 4933149 A
- EP 684871 A
- WO 2005087361 A
- US 4578879 A
- EP 600414 A
- EP 721798 A
- US 4543399 A
- EP 699213 A
- WO 9425495 A
- EP 696293 A
- WO 0105845 A
- EP 499759 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 9815591 A
- EP 1600276 A

**Non-patent literature cited in the description**

- **Geldart ; Bayens.** The Design of Distributors for Gas-fluidized Beds. *Powder Technology,* 1985, vol. 42
- **Geldart.** Gas Fluidization Technology. J.Wiley & Sons, 1986

- **Rauwendaal.** Polymer Extrusion. Hanser, 1986, 460-489
- *JMS - Rev. Macromol. Chem. Phys.,* 1989, vol. C29 (2, 3), 201-317